# EUROPEAN PATENT SPECIFICATION

(11) **EP 0 563 824 B1**
(45) Date of publication and mention of the grant of the patent: **12.02.1997**
(21) Application number: 93105046.2
(22) Date of filing: 26.03.1993
(51) Int. Cl.: B65G 1/04

(54) **Storing system and method**
Verfahren und Vorrichtung zum Lagern
Procédé et dispositif d'entreposage

(30) Priority: 31.03.1992 IL 101435
(43) Date of publication of application: 06.10.1993
(73) Proprietor: ASSA INDUSTRIES (C.S.) LTD, Ramat Gan (IL)
(72) Inventor: Broshi, Yuval, Ramat Gan (IL)
(74) Representative: Modiano, Guido, Dr.-Ing.

(56) References cited:
- FR-A- 2 306 914
- GB-A- 1 187 496
- US-A- 3 592 333
- US-A- 4 355 940
- US-A- 4 852 721

## Description

### FIELD OF THE INVENTION

The present invention concerns a system and method for automated storing, retrieval and transporting of goods for every shape and size and configuration in aisleless warehouses, ships, airplanes, trains, trucks or other means for storing and transporting of goods. The system also provides for erecting of aisleless warehouses, aisleless parking buildings, aisleless parking lots and aisleless storage areas for maximum use of available space.

The invention relates particularly, but not exclusively, to automated storage, retrieval and transportation of goods stacked on pallets and to all kinds of containers.

The invention further relates to the automatic storage and retrieval of cars in parking buildings or parking lots. The invention enables a computerized fully automated handling of stored items, within an aisleless warehouse, from the warehouse to the transporting vehicle, from one transporting vehicle to another and transporting means from the vehicle to a warehouse. It will also enable automated loading and evacuating of containers and automated loading and unloading of the containers to the transporting vehicle or a storage area. The new means can be mounted on a fixed basis or on mobile ones such as ships, airplanes, trains, trucks and containers. It can be mounted as single level or as multilevel structures in any conceivable arrangement of rectangular units.

### SUMMARY OF INVENTION

According to the invention there is provided a system for the storing, retrieving and transporting of goods which are placed on a thin smooth bottomed plate or pallet. Such a system is known from US-A-3 592 333, on which the preamble of the independent claim is based. The invention is characterised in that a stream of compressed air is directed in between said plate and a supporting flat and smooth floor creating an air cushion which enables frictionless movement of said plate, said stream of air being operated such as to follow the movement of said plate.

### EMBODIMENTS OF THE INVENTION

Vehicle cargo bays or cargo containers will also be divided into small rectangular units each of which would contain air pressure on/off control valve and lateral and longitudinal motion inducers. Each of the above units is individually connected to an onboard controlling computer. A standard computer interface will be provided to link vehicle's computer and warehouse computer.

All plates would fit the measurements of said small rectangular units enabling free motion from one unit to the other in either the longitudinal or lateral directions. The stored goods will be placed on the carrying plate in a designated area outside the storage area. The loaded plate will then be lifted on an air cushion and set to motion by the force inducing device, controlled by the controlling computer. Each of the individual units which the plate is about to pass will be activated before the plate enters, to ensure smooth motion of the plate. Each of the units already passed by the plate will be immediately de-activated. The controlling computer will place the above plate at random or according to software defined criteria within the storage area. To enable moves of a plate in a storage area which contains many other plates, the computer will dynamically evacuate all necessary plates sideward as to form a dynamic aisle through which the desired plate will move from one point to the other. For loading to or unloading from a vehicle or container, it is placed adjacent to the storage area with its floor level at the same level as the storage area's floor level as to form a single surface. The vehicles; onboard computer is connected to the storage area's computer to enable the movement of plates to and from the vehicle or container.

In order to erect a multilevel storing warehouse an elevator must be added. The elevator will contain one or more such rectangular units, which are identical in size to those of the entire warehouse. Each of the said rectangular units will contain air pressure on/off control valve and lateral and longitudinal motion inducers.

Each of the above units and the elevator's control will be connected to the main controlling computer. The elevator will be mounted adjacent to the warehouse, so at each level it stops, a smooth continuous surface will be formed to allow the plate's frictionless movement to and from the elevator. The controlling computer with suitable software will handle all movements of the plates and record at every single moment the whereabouts of each item in the storage area. It will manipulate the plates to enable storage and retrieval of goods and calculate the path of movement for each plate simultaneously to ensure smooth movement to and from the storage area exit.

### SHORT DESCRIPTION OF THE DRAWINGS

The invention and method will now be described with reference to the drawings in which:
- Fig. 1: is a perspective schematic illustration of a multilevel storage facility.
- Fig. 1a: is a storing plate and an article placed thereon.
- Fig. 2: is an enlarged perspective illustration of a storing unit.
- Figs. 3a and 3b: are side and top illustrations of an embodiment of a storing unit.
- Figs. 4a and 4b: are side and top illustations of a further embodiment of a storing unit.
- Figs. 5a and 5b: are yet a further embodiment of said unit
- Fig. 6: is an enlarged detail thereof.
- Figs. 7 and 8: illustrate embodiments of the storing plate unit.
- Figs 9 to 11: are not comprised within the scope of the invention

### DETAILED DESCRIPTION OF THE INVENTION

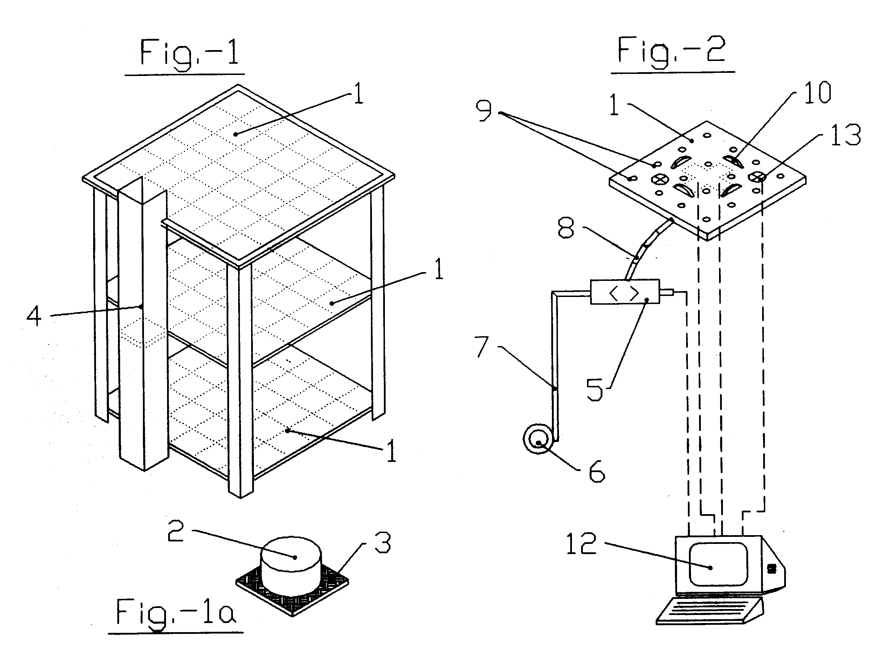

Fig. 1 illustrates schematically a storing facility having three storing plans, each of which is divided into a large number of rectangular units 1. The goods to be stored 2 are placed on a flat smooth bottom carrying plate 3 which in turn is placed, if so required, in an elevator 4 which elevates same to the desired storage plan level.

When elevator 4 stops, it forms a continuous surface with the storage plan, which comprises as stated above, a large number of rectangular units 1.

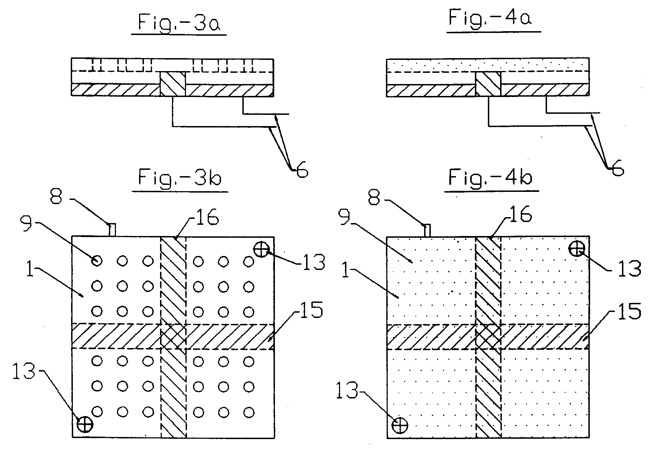

A presured air valve 5 (Fig. 2) is turned on to form a thin air cushion between the carrying plate 3 and the surface thereunder, namely units 1. Simultaneously, pressured air is directed underneath the adjacent rectangular unit, to form frictionless movement surface. The pressured air is obtained from pump 6, and delivered by means of conduits 7 and 8 underneath unit 1 and released via a plurality of apertures 9. Plate 3 is moved by means of different means 10 as will be described. Plate 1 is further provided with sensors 13. Said sensors of both the elevator's rectangular unit and the storage area's rectangular unit 1 sense that the carrying plate 3 entirely moved to the adjacent storage area's first rectangular unit, the elevator's air pressure valve is turned off and simultaneously the air pressure valve of the next adjacent rectangular unit in the desired direction of movement is turned on, enabling the continuous movement of the carrying plate 3. The movement can be induced by lateral motor 10 or by a longitudinal motor to enable movement of the carrying plate to any of the four possible directions. When the carrying plate with its load finally reaches its designated storage place, the local air pressure valve is turned off to stop the air film effect under the carrying plate so it can rest on the storage plan.

All the above functions are controlled by a computer 12 which is connected to every single item in the system. The computer manipulates the movement of all the carrying plates in the storage area to clear the path for ingoing or outgoing carrying plates with the goods placed thereon.

In the same manner any goods could be delivered and transported from the warehouse to another by using trucks equipped with the same facilities. Likewise goods could be transferred to ships, air cargo aircraft and the like. Figs. 3a, 3b, 4a and 4b illustrate a storing unit 1 provided with two linear motors 15 and 16 to induce lateral and longitudinal movement. Said storing units being provided with holes 9 or being made of porous material 9' through which the air stream passes to create the required air cushion. Both motors are activated by electric power controlled by means of computer 12.

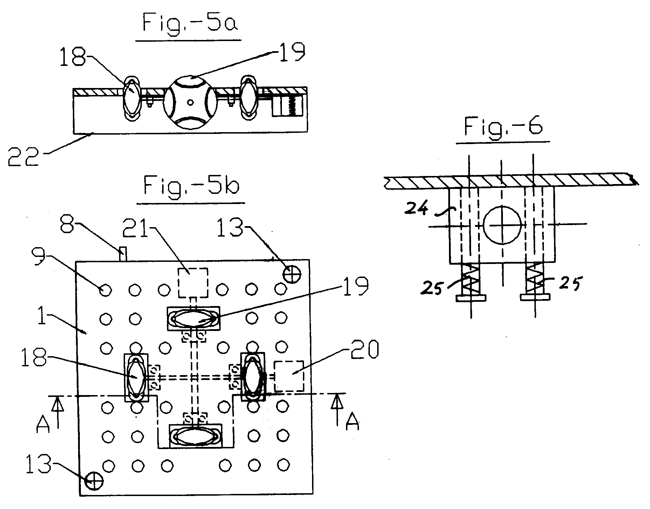

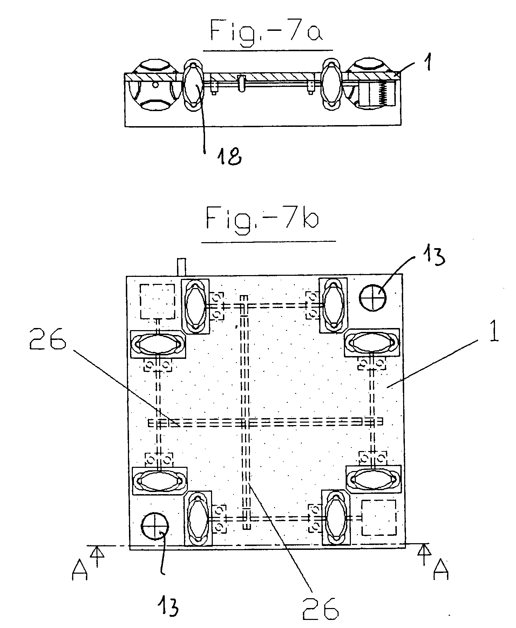

Figs. 5a, 5b and 6 illustrate a different embodiment of storing unit 1. The present unit is provided with two pairs of omnidirectional wheels 18 and 19. The two pairs are connected to two motors 20 and 21. By activating either motor 20 or motor 21 the required lateral or longitudinal movement of the storing plate is obtained. Fig. 6 illustrates the manner in which said mechanism is mounted. The wheels 18 or 19 are mounted within a housing 24. Two springs 25 urge the wheels to establish contact with the plate travelling thereon even though said plate is slightly elevated by means of the air stream. Figs. 7a and 7b illustrate a different arrangement of plate 1. In this arrangement 4 pairs of wheels are mounted within plate 1 each opposing pair is interconnected by means of a chain or drive 26 to enable simultaneous function.

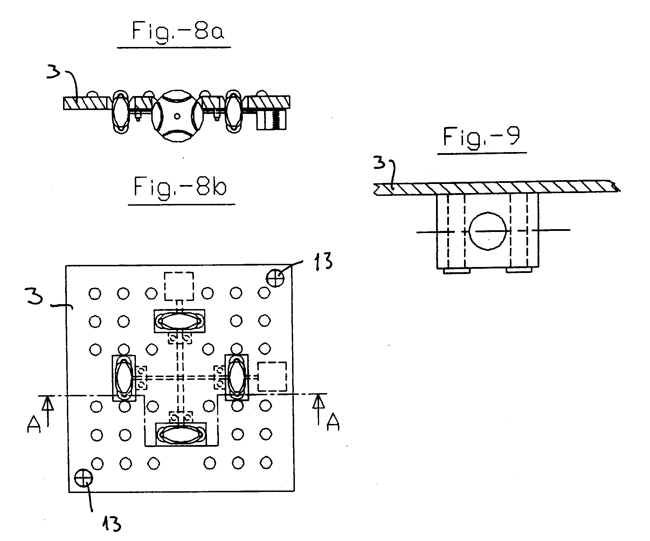

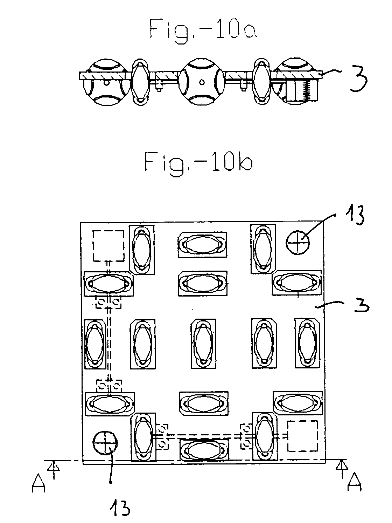

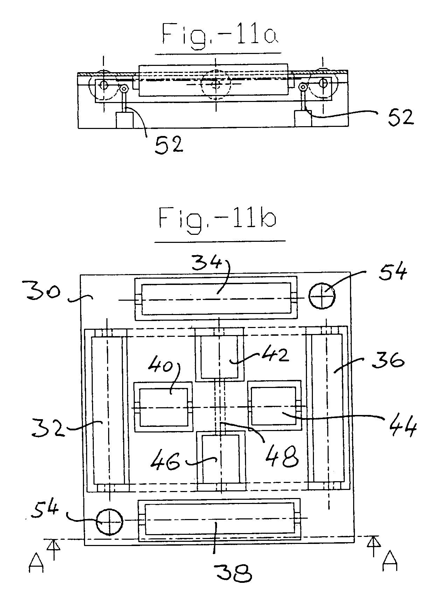

Figures 9, 10a, 10b, 11a and 11b do not fall within the scope of the invention. According to these figures the carrying plate 3 moves on the storing surface without the air cushion, namely plate 3 rests on wheels such as described above. However, these are fixedly mounted without spring 25 (see Fig. 9). The storing surface is preferably be provided with a large number of powered wheels (Fig. 10) to enable smooth lateral or longitudinal movement of plate 3. Finally Fig. 11 relates to a storing surface divided into sections 31 each of which provided with light rollers 32, 34, 36, 38, 40 42, 44 and 46. Rollers 32, 34, 36 and 38 are drum motors i.e. a fixed axis while the outer part rotates. Two of the four inner rollers 40 and 44 are idle while 42 and 46 are interconnected by means of axle 48. Outer rollers 32 and 34 and inner rollers 42 and 44 are mounted within frame structure mounted on pistons 52. At the corners of section 30 there are provided sensors 54. Goods arriving at each such section will be detected by sensors 54 and when travelling in one direction raise rollers 32, 36, 42 and 46 from section 30 by means of pistons 52 so as the goods will travel on. If moving in the perpendicular direction rollers 32, 36, 42 and 46 would be lowered, enabling the goods to travelling on rollers 34, 40, 44 and 38.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A system for storing, retrieving and transporting of goods (2) including a thin, smooth bottomed plate or pallet (3) on which the goods (2) can be placed, means (10) being provided to induce lateral or longitudinal motion of said plate or pallet (3) within or to a storing location which is divided into rectangular units (1) each of which provided with said motion inducing means (10), each of said units (1) being individually connected to a main controlling computer (12) which is adapted to control the whole system, characterized in that a stream of compressed air is directed between said plate or pallet (3) and said rectangular units (1) which comprise the storing area to create an air cushion which enables frictionless movement of said plate or pallet (3), said stream of air being operated such as to follow the movement of said pallet or plate (3).

2. A system according to claim 1, characterized in that said rectangular units (1) are provided with an air pressure on/off control valve (5) which is connected to an air pump (6) both in turn being controlled by said computer (12), said air pump generating said air stream.

3. A system according to claims 1 or 2, characterized in that said rectangular unit (1) is provided with two linear motors (15, 16) which induce lateral or longitudinal movement of said plate or pallet (3) placed thereon.

4. A system according to claims 1 or 2, characterized in that said rectangular unit (1) is provided with at least two pairs of omni-directional wheels (18, 19) which are keyed to two motors (20, 21) which in turn are controlled by said computer (12).

5. A system according to claim 5, characterized in that said wheels (18, 19) are mounted "floatingly" by means of a spring mechanism (25).

6. A system according to claims 1 or 2, characterized in that said rectangular unit (1) is provided with a plurality of multidirectional wheels which enable free movement of said plate placed thereon.

7. A system according to claims 1 or 2, characterized in that said rectangular unit (1) is provided with spheric bodies which enable full movement of said plate placed thereon.

## Patentansprüche

1. Ein System zum Lagern, Herausholen und Transportieren von Waren (2), das eine dünne, glatte Bodenplatte oder Palette (3) einschließt, auf die die Waren (2) gesetzt werden können, wobei Mittel (10) bereitgestellt werden, um die seitliche oder längsgerichtete Bewegung der Platte bzw. Palette (3) innerhalb einer oder zu einer Lagerungsstelle hin zu veranlassen, die in rechteckige Einheiten (1) aufgeteilt ist, wovon jede mit dem die Bewegung veranlassenden Mittel (10) versehen ist, wobei jede Einheit (1) einzeln an einem Hauptsteuerungsrechner (12) angeschlossen ist, der dazu ausgebildet ist, das ganze System zu steuern, dadurch gekennzeichnet, daß ein Druckluftstrom zwischen die Platte bzw. Palette (3) und die rechteckigen Einheiten (1) gelenkt wird, die die Lagerungsfläche umfassen, um ein Luftkissen zu erzeugen, das die reibungslose Bewegung der Platte bzw. Palette (3) gestattet, wobei der Luftstrom so betrieben wird, daß er der Bewegung der Platte bzw. Palette (3) folgt.

2. Ein System nach Anspruch 1, dadurch gekennzeichnet, daß die rechteckigen Einheiten (1) mit einem Luftdruck-Ein/Aus-Steuerventil (5) ausgestattet werden, das mit einer Luftpumpe (6) verbunden ist, wobei beide wiederum durch den Computer (12) gesteuert werden, wobei die Luftpumpe den Luftstrom erzeugt.

3. Ein System nach den Ansprüchen 1 oder 2, dadurch gekennzeichnet, daß die rechteckige Einheit (1) mit zwei linearen Motoren (15, 16) ausgestattet wird, die die seitliche oder längsgerichtete Bewegung der daran befindlichen Platte bzw. Palette (3) veranlassen.

4. Ein System nach den Ansprüchen 1 oder 2, dadurch gekennzeichnet, daß die rechteckige Einheit (1) mit mindestens zwei Paaren Allrichtungsräder (18, 19) ausgestattet wird, die auf zwei Motoren (20, 21) abgestimmt sind, die wiederum durch den Computer (12) gesteuert werden.

5. Ein System nach Anspruch 5, dadurch gekennzeichnet, daß die Räder (18, 19) mittels eines Federmechanismus (25) 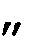 schwebend" befestigt sind.

6. Ein System nach den Ansprüchen 1 oder 2, dadurch gekennzeichnet, daß die rechteckige Einheit (1) mit einer Mehrzahl von multidirektionalen Rädern ausgestattet wird, die die freie Bewegung der daran befindlichen Platte ermöglichen.

7. Ein System nach den Ansprüchen 1 oder 2, dadurch gekennzeichnet, daß die rechteckige Einheit (1) mit sphärischen Körpern ausgestattet wird, die die vollständige Bewegung der daran befindlichen Platte ermöglichen.

## Revendications

1. Un système pour emmagasiner, récupérer et transporter des marchandises (2), comportant une plaque ou palette mince (3), à fond lisse sur laquelle les marchandises (2) peuvent être placées, des moyens (10) étant prévus pour provoquer un mouvement latéral ou longitudinal de ladite plaque ou palette (3) dans le lieu d'emmagasinage ou vers ce lieu, qui est divisé en unités rectangulaires (1) chacune desquelles est pourvue desdits moyens (10) provoquant le mouvement, chacune desdites unités (1) étant individuellement reliée à un ordinateur principal (12) de contrôle capable de contrôler l'entier système, caractérisé en ce qu'un courant d'air comprimé est dirigé entre ladite plaque ou palette (3) et lesdites unités rectangulaires (1) qui comprennent la surface d'emmagasinage pour créer un coussin d'air qui permet un mouvement sans friction de ladite plaque ou palette (3), ledit courant d'air étant fait fonctionner de façon qu'il suive le mouvement de ladite palette ou plaque (3).

2. Un système selon la revendication 1, caracterisé en ce que lesdites unités rectangulaires (1) sont munies d'une soupape (5) de contrôle tout ou rien de la pression d'air, qui est reliée à une pompe d'air (6), les deux étant à leur tour contrôlées par ledit ordinateur (12), ladite pompe d'air générant ledit courant d'air.

3. Un système selon les revendications 1 ou 2, caractérisé en ce que ladite unité rectangulaire (1) est pourvue de deux moteurs linéaires (15, 16), qui causent le mouvement latéral ou longitudinal de ladite plaque ou palette (3) placée sur ladite unité.

4. Un système selon les revendications 1 ou 2, caractérisé en ce que ladite unité rectangulaire (1) est pourvue d'au moins deux roues omni-directionnelles (18, 19) qui sont goujonnées à deux moteurs (20, 21) qui à leur tour sont contrôlés par ledit ordinateur (12).

5. Un système selon la revendication 5, caractérisé en ce que lesdites roues (18, 19) sont montées d'une façon "flottante" à l'aide d'un mécanisme à ressort (25).

6. Un système selon la revendication 1 ou 2, caractérisé en ce que ladite unité rectangulaire (1) est munie d'une pluralité de roues multidirectionnelles qui permettent le libre mouvement de ladite plaque placée sur l'unité.

7. Un système selon les revendications 1 ou 2, caractérisé en ce que ladite unité rectangulaire (1) est munie de corps sphériques, qui permettent un mouvement complet de ladite plaque placé sur ladite unité.
